# EUROPEAN PATENT APPLICATION

(11) **EP 1 961 635 A1**
(43) Date of publication of application: **27.08.2008**
(21) Application number: 08101843.4
(22) Date of filing: 21.02.2008
(51) Int. Cl.: B60T 8/17, B60T 8/1755

(54) **Electronic protection for articulated vehicles**

(30) Priority: 22.02.2007 US 677679
(71) Applicant: Honeywell International Inc., Morristown, New Jersey 07962 (US)
(72) Inventor: Hartman, Randolph G., Plymouth, MN 55442 (US)
(74) Representative: Buckley, Guy Julian

(57) **Abstract**

An electronic protection system (100) for an articulated vehicle comprises a lead sensor (108) configured to detect yaw rotational rate of a lead portion (e.g. a truck) about a first yaw axis; a load sensor (106) configured to detect yaw rotational rate of a load portion (e.g. a trailer) about a second yaw axis; and a processing unit (110) coupled to the lead sensor and the load sensor, wherein the processing unit (110) is configured to determine when to initiate corrective controls based at least in part on the data received from the lead sensor and the load sensor. The risk of various potentially dangerous events, such as slipping, rolling, jack knifing, is detected and reduced.

## Description

### BACKGROUND

Articulated vehicles are able to perform sharper turns than rigid vehicles due to the pivoting joint. However, articulated vehicles can also be subject to certain dangerous conditions, such as jack knifing. Jack knifing refers to the condition of accidental folding of the articulated vehicle where one segment rotates about the pivoting point to such an extent that it approaches facing the opposite direction of the other segment. Jack knifing can be caused by adverse road conditions, such as ice and wet roads, and certain driving maneuvers, such as, sudden turning and over- and under-steering.

Many devices have been developed to attempt to minimize the possibility of jack knifing, such as load-sensing brake pressure regulators, anti-lock brakes, and devices to limit the maximum angle attainable about the pivoting point. These devices have varying levels of effectiveness in preventing jack knifing. For example, load-sensing brake pressure regulators reduce the amount of brake pressure applied to the rear brakes based on how much weight is in the rear portion of the articulated vehicle. However, despite the different devices employed, jack knifing and other similar dangerous conditions are still potential hazards for articulated vehicles.

### SUMMARY

The above-mentioned problems of current systems are addressed by embodiments of the present invention and will be understood by reading and studying the following specification. The following summary of an embodiment is made by way of example and not by way of limitation. It is merely provided to aid the reader in understanding some of the aspects of the invention.

In one embodiment, an electronic protection system for an articulated vehicle is provided. The electronic protection system comprises a lead sensor configured to detect yaw rotational rate of a lead portion about a first yaw axis; a load sensor configured to detect yaw rotational rate of a load portion about a second yaw axis; and a processing unit coupled to the lead sensor and the load sensor, wherein the processing unit is configured to determine when to initiate corrective controls based at least in part on the data received from the lead sensor and the load sensor.

### DRAWINGS

The present invention can be more easily understood and further advantages and uses thereof more readily apparent, when considered in view of the description of the following figures in which:
Figure 1 is a block diagram of an electronic protection system according to one embodiment of the present invention.
Figure 2A is a side view of an articulated vehicle employing an electronic protection system according to one embodiment of the present invention.
Figure 2B is a top view of an articulated vehicle employing an electronic protection system according to one embodiment of the present invention.
Figure 3 is a flow chart showing a method of providing electronic protection in an articulated vehicle according to one embodiment of the present invention.
Figure 4 is a flow chart showing a method of determining corrective controls to be initiated according to one embodiment of the present invention.
Figure 5 is a flow chart showing a method of determining corrective controls to be initiated according to another embodiment of the present invention.

Like reference numbers and designations in the various drawings indicate like elements.

### DETAILED DESCRIPTION

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. It should be understood that the exemplary method illustrated may include additional or fewer steps or may be performed in the context of a larger processing scheme. Furthermore, the method presented in the drawing figures or the specification is not to be construed as limiting the order in which the individual steps may be performed. The following detailed description is, therefore, not to be taken in a limiting sense.

Embodiments of the present invention provide additional protection against adverse events, such as jack knifing, in articulated vehicles via an electronic system adapted to detect the onset of adverse events. Whereas prior means of preventing jack knifing focus on limiting conditions which may lead to jack knifing (e.g. locked brakes and empty trailers), embodiments of the present invention can detect the onset of jack knifing and then provide varying corrective measures to prevent jack knifing. Hence, embodiments of the present invention enable additional protection against jack knifing.

It is to be noted that the term "articulated vehicle" as used herein refers to a vehicle which has a pivoting joint, whether permanent or semi-permanent, which enables the vehicle to turn more sharply. An articulated vehicle includes, but is not limited to, articulated buses, truck-trailers or semi-trucks, and vehicles pulling a load via a pivot point such as a hitch (e.g. a vehicle pulling a boat). In addition, as used herein, the term "lead portion" refers to the segment of the articulated vehicle which controls the direction of movement and the term "load portion" refers to the segment (or segments e.g. a tandem trailer) of the articulated vehicle which follows the lead portion. For example, in a semi-truck, the cab is the lead portion and the trailer is the load portion. The pivoting point enables sharper turns by enabling the lead portion and load portion to independently rotate about each of their respective yaw axes.

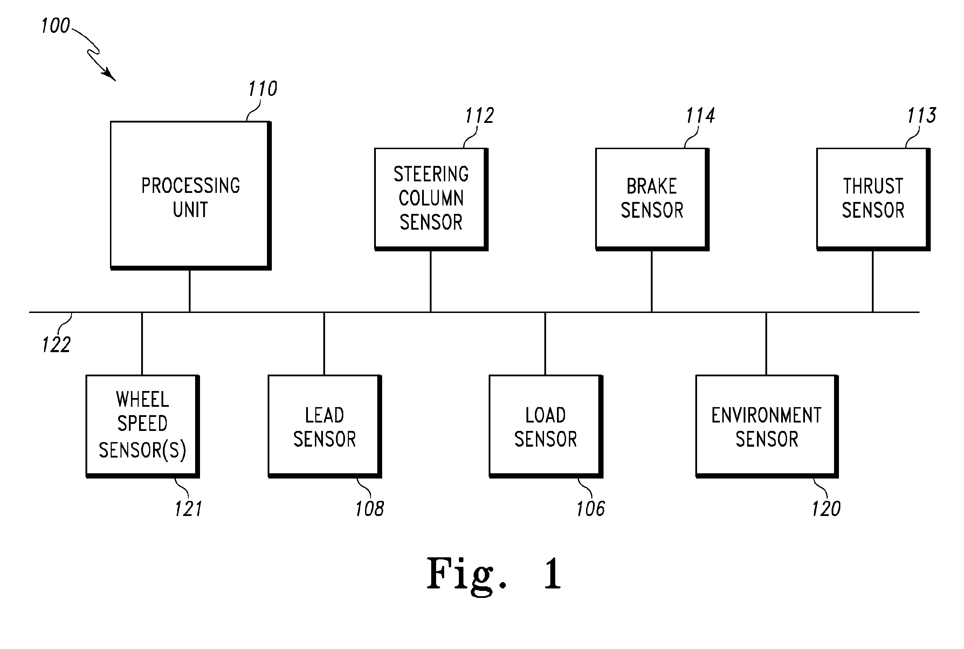

Figure 1 is a high level block diagram of an electronic protection system 100 according to one embodiment of the present invention. System 100 includes a processing unit 110 coupled to two or more sensors. Processing unit 110 is adapted to detect the hazardous conditions based on the data received from the two or more sensors. In one embodiment, the sensors are inertial sensors which sense at least yaw and/or lateral acceleration. If hazardous conditions are detected, processing unit 110 calculates the appropriate corrective action to be taken. Corrective action includes, but is not limited to, independent wheel breaking, throttle control, pivot control or steering control. Notably, although jack knifing is discussed in the present description, it is to be understood that embodiments of the present invention are not limited to protecting against jack knifing. In particular, embodiments of the present invention can be used to detect and reduce the risk of various potentially dangerous events, such as slipping, rolling, etc.

Instructions for carrying out the various process tasks, calculations, and generation of signals and other data used in the operation of system 100 to detect and prevent jack knifing can be implemented in software, firmware, or other computer readable instructions. These instructions are typically stored on any appropriate computer readable medium used for storage of computer readable instructions or data structures. Such computer readable media can be any available media that can be accessed by a general purpose or special purpose computer or processor, or any programmable logic device.

Suitable computer readable media may comprise, for example, non-volatile memory devices including semiconductor memory devices such as EPROM, EEPROM, or flash memory devices; magnetic disks such as internal hard disks or removable disks (e.g., floppy disks); magneto-optical disks; CDs, DVDs, or other optical storage disks; nonvolatile ROM, RAM, and other like media. Any of the foregoing may be supplemented by, or incorporated in, specially-designed application-specific integrated circuits (ASICs). When information is transferred or provided over a network or another communications connection (either hardwired, wireless, or a combination of hardwired or wireless) to a computer, the computer properly views the connection as a computer readable medium. Thus, any such connection is properly termed a computer readable medium. Combinations of the above are also included within the scope of computer readable media.

The two or more sensors are coupled to processing unit 110 via bus 122. In this embodiment, bus 122 is implemented using the Controller Area Network (CAN) bus interface. However, it is to be understood that, in other embodiments, other bus interfaces can be used. In addition, the sensors can be coupled to processing unit 110 via various media such as twisted pair wire, optical wire, wireless signals, etc.

The two or more sensors coupled to processing unit 110 include at least lead sensor 108 and load sensor 106. Lead sensor 108 is located in a lead portion of an articulated vehicle. Load sensor 106 is located in the load portion of the articulated vehicle. Alternatively, one of lead sensor 108 and load sensor 106 can be replaced, in other embodiments, by a sensor at a pivot point which measures rotation about the pivot point. For example, in one such embodiment, load sensor 106 is located in a load portion and lead sensor 108 is replaced by a sensor located at a pivot point. Knowledge of the motion of the load sensor and rotation at the pivot point is used to calculate the motion of the lead portion.

In this embodiment, lead sensor 108 and load sensor 106 each include at least one rotation sensor for detecting rotation about a yaw axis (also referred to as a normal axis). In particular, lead sensor 108 and load sensor 106 detect yaw rotation rate of the respective lead or load segment of the vehicle. In addition, in this embodiment, each of lead sensor 108 and load sensor 106 include at least one linear motion sensor for detecting lateral movement along a lateral axis. However, it is to be understood that lead sensor 108 and load sensor 106 are not to be limited to one rotation sensor and one linear motion sensor. For example, in some embodiments, each of lead sensor 108 and load sensor 106 includes three rotation sensors for detecting yaw, pitch and roll rates as well as 3 linear motion sensors for detecting linear movement along the corresponding normal, lateral, and longitudinal orthogonal axes. These additional sensors can be implemented as inertial sensors like gyroscopes and accelerometers or alternately this information could be derived from multiple relative sensors like global positioning system (GPS) receivers. The combination of these additional sensors can provide data regarding road conditions such as the bank, attitude and slope of the road which are used in determining appropriate corrective controls.

In addition to lead sensor 108 and load sensor 106, some embodiments also include maneuver sensors such as, but not limited to, steering column sensor 112, thrust sensor 113 and/or brake sensor 114. Maneuver sensors provide data to processing unit 110 regarding the intent of maneuvers being executed by an operator of the vehicle. For example, brake sensor 114 provides data regarding a braking force provided by an operator and steering column sensor 112 provides data regarding any turning maneuvers being executed by the operator. Similarly, thrust sensor 113 provides data regarding thrust controls such as pressure applied to a gas pedal, etc. Hence, processing unit 110 is able to determine the movement desired by the operator based on the controls (e.g. steering, thrust, brake, etc.) executed by the operator.

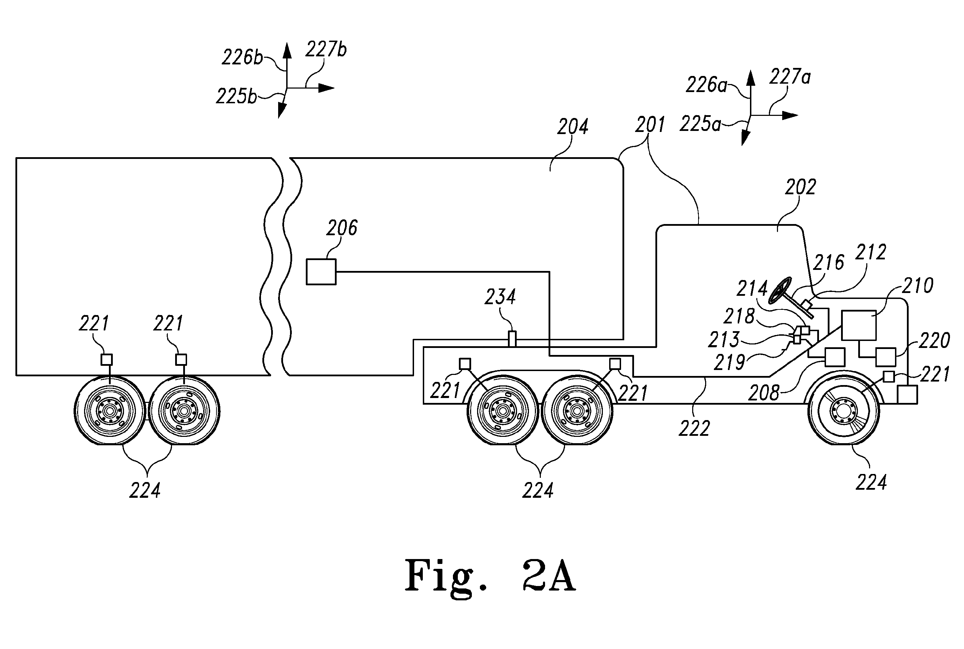

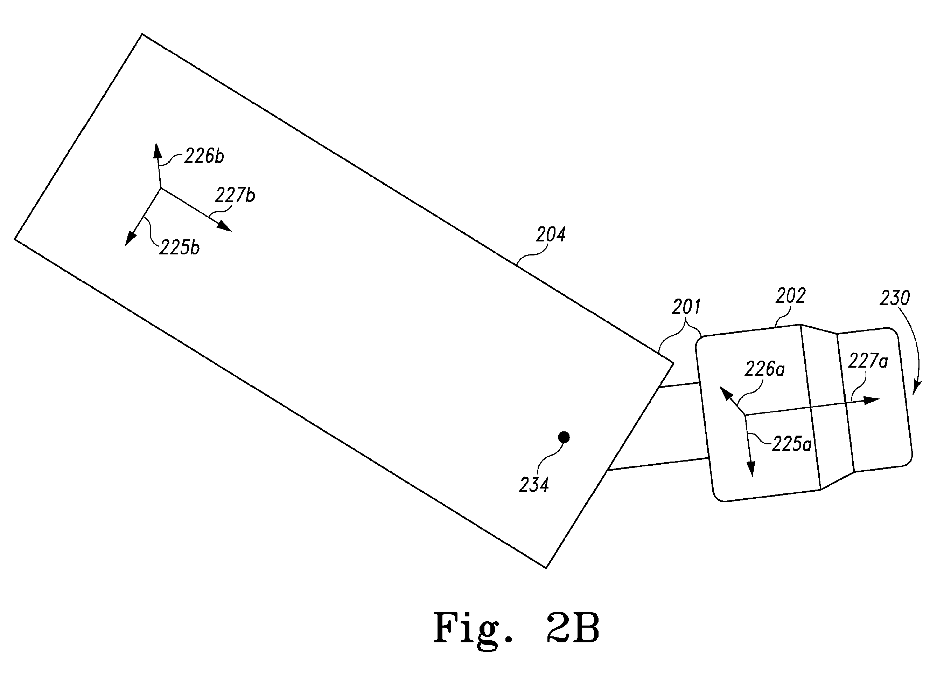

Some embodiments also include environment sensor 120. Environment sensor 120 provides data to processing unit 110 regarding the conditions of the environment and road in the area of the articulated vehicle. Environment sensor 120 can include a global positioning sensor, road map database, load weight sensor, and/or a sensor for obtaining weather data, etc. Hence environment sensor 120 enables processing unit 110 to consider current and future road conditions (e.g. curves, wet pavement, wind, etc.) in calculating appropriate controls to be taken if corrective controls are necessary. In addition, some embodiments include one or more wheel speed sensors 121 (for example, one wheel speed sensor for each wheel). Wheel speed sensor 121 measures the rotation of a wheel. Processing unit 110 uses this information to determine various conditions of the wheel. For example, the information can be used to determine if the wheel is slipping, if the brakes are slowing the wheel speed appropriately, and the speed of the articulated vehicle. Operation of system 100 is described in more detail with regards to Figures 2A and 2B.

Figure 2A is a side view of an articulated vehicle 201 employing an electronic protection system, such as electronic protection system 100, according to one embodiment of the present invention. Figure 2B is a top view of the articulated vehicle 201. In this embodiment, articulated vehicle 201 is a semi-truck with lead portion 202 being the cab and load portion 204 being the trailer. However, it is to be understood that, in other embodiments, other types of articulated vehicles can be used, such as tandem trailers, trucks/SUVs pulling boats or other trailers, etc. Load portion 204 and lead portion 202 are coupled together via pivot point 234. Each of lead portion 202 and load portion 204 is able to rotate independently about normal axes 226a and 226b respectively (i.e. yaw rotation). Normal axes 226a and 226b go into and out of the page in Fig. 2B. Similarly, lateral axes 225a and 225b go into and out of the page in Fig. 2A.

It is also to be understood that the locations of elements of the electronic protection system in Figures 2A and 2B are exemplary and that one of skill in the art can determine an appropriate location for the elements. For example, although load sensor 206 is located at the center of mass in load portion 204 in this example, its location in load portion 204 can vary in other embodiments. One exemplary alternative location is anywhere along a center line through the center of load portion 204. In particular, lever arm compensation can be used, in some embodiments, to implement load sensor 206 in various locations.

Lead sensor 208 is located in lead portion 202 and load sensor 206 is located in load portion 204. Lead sensor 208 and load sensor 206 each comprise at least one rotational sensor to detect rotation rate about yaw axes 226a and 226b, respectively. In addition, lead sensor 208 and load sensor 206 each comprise at least one linear motion sensor in this embodiment to detect linear movement along lateral axes 225a and 225b, respectively. Lead sensor 208 and load sensor 206 provide the data to processing unit 210 via bus 222. Additionally, in some embodiments, additional sensors, such as wheel speed sensors 221, provide data regarding the rotation of wheels 224 to processing unit 210 via bus 222. In particular, wheel speed sensors 221 provide independent data for each wheels motion (e.g. braking, slipping, etc.) so that, for example, the effectiveness of corrective controls being taken can be evaluated.

In addition, one or more of thrust sensor 213, brake sensor 214, and steering column sensor 212 provide data regarding the intent of an operator of vehicle 201 to processing unit 210 via bus 222. In particular, in this embodiment, thrust sensor 213 provides data regarding pressure applied by an operator to gas pedal 219. Similarly, brake sensor 214 provides data regarding pressure applied to brake 218 and steering column sensor 212 provides data regarding controls initiated by the operator using steering column 216. It is to be noted that thrust sensor 213, brake sensor 214, and steering column sensor 212 are presented by way of example and not by way of limitation. In particular, in other embodiments, other maneuver sensors can be used. Processing unit 210 uses the data supplied by maneuver sensors to determine the motion intended by the operator of articulated vehicle 201.

Based on the data provided by lead sensor 208, load sensor 206, wheel speed sensors 221, and maneuver sensors (e.g. steering column sensor 212), processing unit 210 determines if articulated vehicle 201 is moving as intended by the operator. For example, if the operator turns the steering column to perform a 10 degree turn, processing unit 210 uses the data received to compare the intended motion (based on maneuver sensor data) to the actual motion (based on lead sensor 208 and load sensor 206). Processing unit 210 determines if any variance between actual and intended motion indicates a potentially hazardous condition. If so, processing unit 210 calculates and determines or applies corrective controls to reduce the likelihood that the potentially hazardous condition occurs. For example, if the variance indicates the onset of a jack knifing condition, wheel slipping, rollover, etc, processing unit 210 initiates corrective controls to avoid the hazardous conditions. Alternatively, processing unit 210 can signal warnings (e.g. visual, audio or physical cues) to the operator in addition to or in lieu of initiating corrective controls. For example, steering column 216 vibrates in one embodiment when corrective measures are being taken.

Other data which also influence when and what corrective controls are to be initiated include but are not limited to, the weight of load portion 204 and lead portion 202, road conditions (e.g. bank, attitude, slope, wet, dry, etc.), linear speed of articulated vehicle 201 and the size of wheels 224. Hence, in some embodiments, one or more environment sensors 220 are used. Environment sensors 220 provide data regarding the road conditions, weather conditions, weight of cargo in load portion 204, etc. As stated above, environment sensors 220 can include, but are not limited to a global positioning sensor, road map database, load weight sensor, and/or a sensor for obtaining weather data, etc.

Exemplary corrective controls include, but are not limited to, selectively applying brakes to individual wheels 224, reducing speed of articulated vehicle 201, adjusting steering column 216, pivot damping at pivot point 234, etc. Appropriate detection and corrective measures are determined through empirical and analytical studies and vary based on the articulated vehicle in question, the road conditions, the weather conditions, etc.

In the foregoing manner, embodiments of the present invention can detect onset of dangerous conditions, such as jack knife conditions, and warn a driver of the condition and/or initiate corrective controls to prevent the condition. In addition, when and what corrective controls to initiate can be programmed based on the use of articulated vehicle 201 or other conditions. For example, if articulated vehicle 201 is carrying nuclear material, processing unit 210 can be programmed to initiate corrective controls earlier and provide more limits on the operator (e.g. enforcing speed limits) than if articulated vehicle 201 is carrying less hazardous material such as live stock. Hence, additional safety is provided to articulated vehicles through electronic protection systems according to embodiments of the present invention.

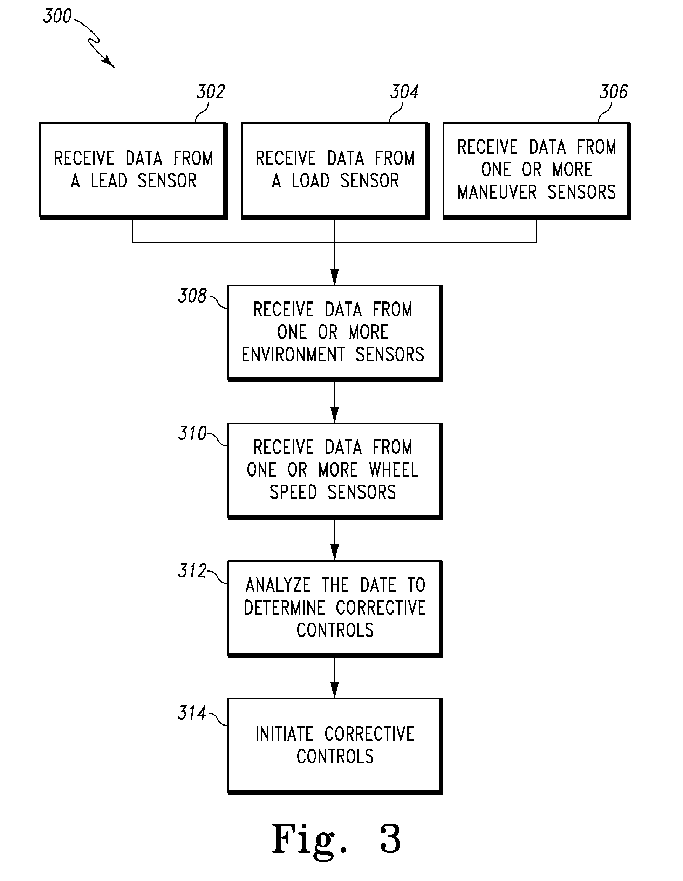

Figure 3 is a flow chart showing a method 300 of providing electronic protection in an articulated vehicle according to one embodiment of the present invention. At 302, data is received from a lead sensor located in the lead portion of an articulated vehicle (e.g. lead sensor 208 in lead portion 202 of articulated vehicle 201 in Fig. 2) by a processing unit (e.g. processing unit 210 in Fig. 2). The lead sensor includes at least one rotational sensor for detecting yaw rotation rate of the lead portion about a normal axis (e.g normal axis 226a) and at least one linear accelerometer for detecting lateral motion of the lead portion along a lateral axis (e.g. lateral axis 225a).

At 304, data is received from a load sensor located in the load portion of the articulated vehicle (e.g. load sensor 206 in load portion 204 of articulated vehicle 201 in Fig. 2) by the processing unit. The load sensor includes at least one rotational sensor for detecting yaw rotation rate of the load portion about a normal axis (e.g normal axis 226b) and at least one linear accelerometer for detecting lateral motion of the load portion along a lateral axis (e.g. lateral axis 225b).

At 306, data is received from one or more maneuver sensors (e.g. steering column sensor 212). The one or more maneuver sensors provide data regarding the intent of the vehicle's operator as described above. Data from the lead sensor, the load sensor, and the one or more maneuver sensors is received synchronously in this embodiment. However, in other embodiments, the data is received asynchronously. At 308, data is optionally received from one or more environment sensors (e.g. environment sensors 220). As described above, environment sensors provide data regarding the conditions of the environment and road in the area of the articulated vehicle. At 310, data is optionally received from one or more wheel speed sensors (e.g. wheel speed sensors 221) which provide data regarding the motion of the vehicle's wheels as described above.

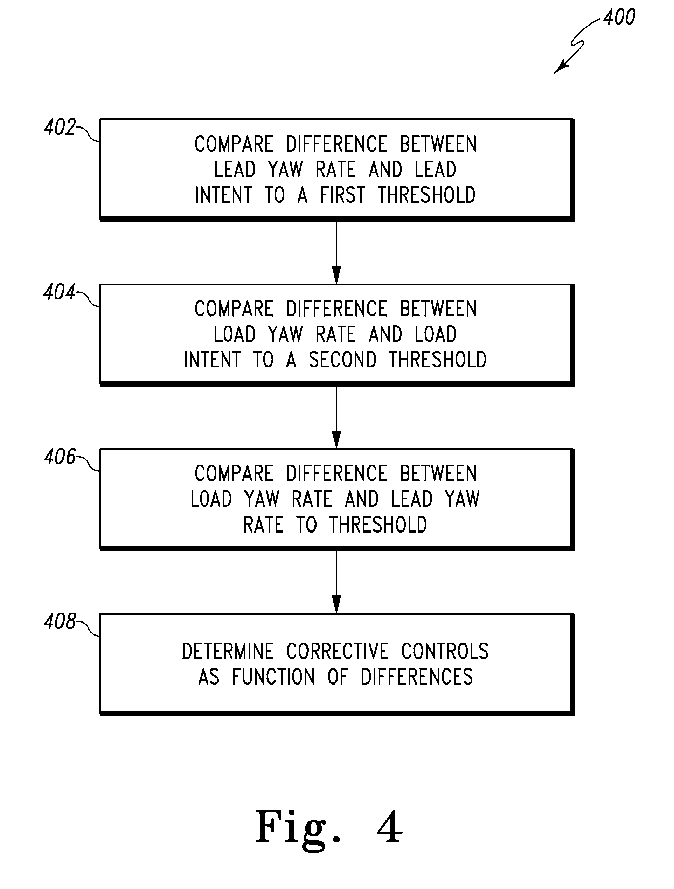

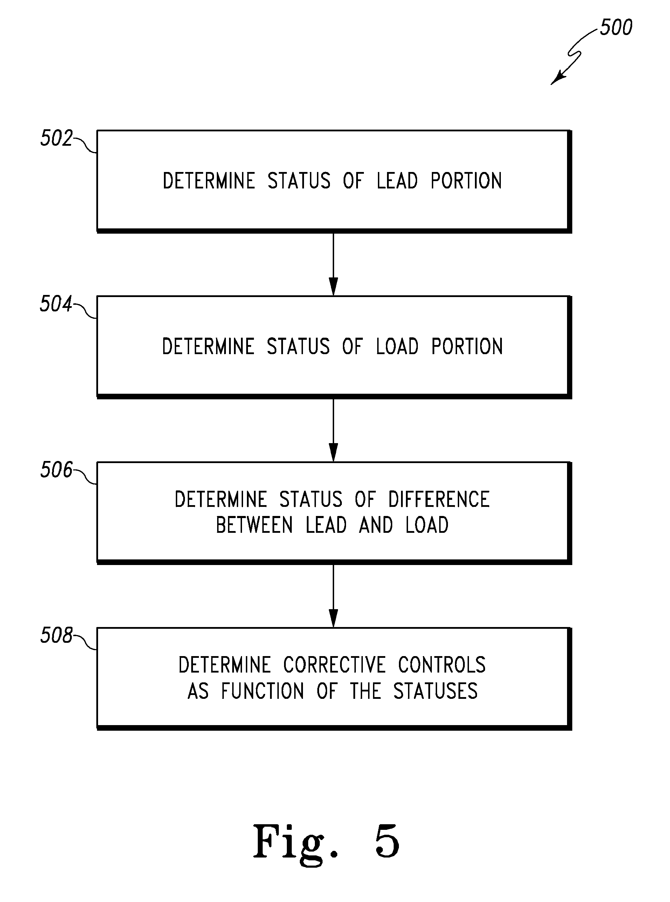

At 312, a processing unit (e.g. processing unit 210) analyzes the received data to determine if corrective controls need to be initiated and which corrective controls to initiate. In this embodiment, the processing unit determines when and which corrective controls to initiate as a function of the data received. For example, the processing unit 210 uses a complex matrix to determine the corrective controls based on the lead yaw rate, the load yaw rate, lead lateral acceleration, load lateral acceleration, road conditions, cargo type, weather conditions, etc. Alternative methods for determining the corrective controls are discussed below with regards to Figs. 4 and 5. At 314, the corrective controls are initiated. Initiating the corrective controls includes alerting the operator via visual, audible, or physical cues in some embodiments. In addition, in this embodiment, the corrective controls are initiated automatically by the processing unit. However, in other embodiments, the corrective controls can be initiated by the operator after being alerted.

Figure 4 is a flow chart showing a method 400 of determining corrective controls to be initiated according to one embodiment of the present invention. At 402, the difference between the actual lead yaw rate and the intended lead yaw rate is compared to a first threshold value. This comparison determines if the lead yaw rate is consistent with the intent of the operator while allowing for some variance. At 404, the difference between the actual load yaw rate and the intended load yaw rate is compared to a second threshold value. This comparison also determines if the load yaw rate is consistent with the intent of the operator while allowing for some variance.

At 406, the difference between the lead yaw rate and the load yaw rate is compared to a third threshold value. This comparison determines if variance in the movement of the lead and load is approaching dangerous conditions. At 408, it is determined if corrective controls are necessary based on the results of the comparisons and which corrective controls to be used are calculated based on the three calculated differences (i.e. intended lead yaw rate vs. actual lead yaw rate, intended load yaw rate vs. actual load yaw rate, and actual lead yaw rate vs. actual load yaw rate).

Figure 5 is a flow chart showing a method 500 of determining corrective controls to be initiated according to one embodiment of the present invention. At 502, the status of the lead portion is determined. The status of the lead portion is a function of the lead yaw rate, lead lateral acceleration, and intended lead motion. At 504, the status of the load portion is determined. The status of the load portion is a function of the load yaw rate, load lateral acceleration, and intended load motion. In addition, in some embodiments, the status of the lead portion is also a function of data from wheel speed sensors (for example, wheel speed sensors 221). At 506, the status of the difference between the motion of the lead portion and the load portion is determined. The difference status is calculated as a function of the lead yaw rate, load yaw rate, lead lateral acceleration, and load lateral acceleration. In addition, in some embodiments, the status of the load portion is also a function of data from wheel speed sensors. At 508, when and what corrective controls to be initiated are determined based on the calculated lead portion status, load portion status, and difference status. Corrective controls include, but are not limited to, independent wheel braking, steering limiting, pivot control or notification to the operator.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. An electronic protection system (100) for an articulated vehicle comprising:
a lead sensor (108) configured to detect yaw rotational rate of a lead portion about a first yaw axis;
a load sensor (106) configured to detect yaw rotational rate of a load portion about a second yaw axis; and
a processing unit (110) coupled to the lead sensor (108) and the load sensor (106), wherein the processing unit (110) is configured to determine when to initiate corrective controls based at least in part on the data received from the lead sensor (108) and the load sensor (106).

2. The electronic protection system (100) of claim 1, wherein the load sensor (106) and the lead sensor (108) each further comprise at least one of:
a plurality of additional rotational sensors for detecting pitch and roll rotational rates; and
a plurality of linear motion sensors for detecting movement along a normal axis, longitudinal axis, and lateral axis.

3. The electronic protection system (100) of claim 2, wherein the plurality of linear motion sensors and rotational sensors are based on global positioning system (GPS) receivers.

4. The electronic protection system (100) of claim 1, further comprising one or more maneuver sensors (112, 113, 114) configured to detect controls executed by an operator of the articulated vehicle, wherein the processing unit (110) is configured to determine when to initiate corrective controls based at least in part on the data received from the lead sensor (108), the load sensor (106), and the one or more maneuver sensors (112, 113, 114).

5. The electronic protection system (100) of claim 4, wherein the one or more maneuver sensors (112, 113, 114) further comprise at least one of:
a steering column sensor (112) coupled to the processing unit (110) and configured to gather data regarding steering maneuvers being executed by the operator of the articulated vehicle;
a brake sensor (114) coupled to the processing unit (110) and configured to gather data regarding brake pressure being applied by the operator of the articulated vehicle; and
a thrust sensor (113) coupled to the processing unit (110) and configured to gather data regarding pressure being applied by the operator of the articulated vehicle to the gas pedal.

6. The electronic protection system (100) of claim 4, wherein the processing unit (110) determines the intent of the operator based on the data from the one or more maneuver sensors (112, 113, 114), the actual motion of the lead portion and the load portion based on the data from the lead sensor (108) and the load sensor (106), and when to initiate corrective controls based on a comparison of the intent of the operator with the actual motion of the lead portion and the load portion.

7. The electronic protection system (100) of claim 1, further comprising a plurality of wheel sensors (121), each wheel sensor (121) coupled to at least one of the wheels of the articulated vehicle and configured to provide data regarding the motion of the wheels.

8. The electronic protection system (100) of claim 1, further comprising an environment sensor (120) coupled to the processing unit (110) and configured to gather data regarding environment conditions around the articulated vehicle, wherein the processing unit (110) uses data from the environment sensor (120) to determine when to initiate corrective controls.

9. The electronic protection system (100) of claim 8, wherein the environment sensor (120) further comprises at least one of:
a global positioning sensor adapted to provide location data of the articulated vehicle;
a weather sensor adapted to gather data regarding current weather conditions around the articulated vehicle; and
a road map database.

10. The electronic protection system (100) of claim 1, wherein the processing unit (110) is configured to provide corrective controls comprising at least one of:
selectively applying brake pressure to individual wheels;
turning the steering control;
reducing motor power to reduce the articulated vehicle's speed;
damping pivot motion; and
providing one of audio, visual, and physical warnings to an operator.
